# EUROPEAN PATENT APPLICATION

(11) **EP 4 715 700 A1**
(43) Date of publication of application: **25.03.2026**
(21) Application number: 25198463.9
(22) Date of filing: 27.08.2025
(51) Int. Cl.: G06Q 10/0631, G06F 21/55, H04L 9/40

(54) **METHOD, SYSTEM AND COMPUTER PROGRAM PRODUCT FOR PROVIDING AUTOMATIC SANCTIONING OF USERS BASED ON RISK SCORE**

(30) Priority: 20.09.2024 NO 20240950
(71) Applicant: Aiba AS, 2815 Gjøvik (NO)
(72) Inventor: STØE, Gard, 2386 Brumunddal (NO); HÜLSDAU, Marcus, 2322 Ridabu (NO); FARSTAD, Marcus, 8704 Herrliberg Zurich (CH); BRATENG, Marius Hernes, 2819 Gjøvik (NO); HOLEN, Andreas, 2849 Kapp (NO); KVAM, Steinar, 1671 Kråkerøy (NO)
(74) Representative: Acapo Onsagers AS

(57) **Abstract**

The present invention relates to a method and system for automatically sanctioning users in an online community based on risk scores derived from user-generated content and behavior data. The system includes a machine learning risk score engine that processes segmented sessions of user activity, assigning risk scores according to predefined violation categories. These risk scores are aggregated and compared to configurable thresholds specific to each violation category. If the aggregated risk score exceeds the threshold, the system automatically triggers a sanction, such as a warning, muting, temporary suspension, or permanent ban. The system continuously monitors user activity, recalculating risk scores with new data, ensuring ongoing evaluation and appropriate sanctioning. The invention offers flexibility through customizable thresholds and violation categories, enhancing the effectiveness and precision of automated moderation in online communities.

## Description

### Technical field

The present patent application relates to automatic sanction of users displaying unwanted behavior based on detection of risk and behavior.

### Background

With the increasing use of social media and online gaming among children, there has been a corresponding rise in their exposure to unwanted behavior and threats from malicious users. Incidents of grooming, toxic behavior, and the use of fake profiles targeting children have become widespread, representing a significant threat to their safety. Traditionally, online communities have attempted to mitigate these risks by employing human moderators to manually review user-generated content and sanction users based on their findings. Moderators inspect various pieces of content to determine the appropriate actions, if any, to sanction users.

Known solutions often involve the use of automated systems that sanction users based on the detection of specific words or phrases. However, these methods are limited by their reliance on exact matches, making them less effective in identifying nuanced or evolving threats. Furthermore, manual moderation requires a substantial amount of labor, making it unsustainable and inefficient in the long term. The vast volume of data generated by users exceeds human capacity to review and evaluate effectively, leading to imprecise sanctions and the potential for falsely accusing innocent users.

There is a pressing need for an automatic solution capable of accurately identifying risks within large volumes of user activity. Such a solution would provide reliable sanctions against users exhibiting dangerous behavior, thereby enhancing the safety of children in online environments. These following embodiments according to the present application address these critical vulnerabilities by providing continuous biometric verification during video calls, ensuring that only genuine, real-time media streams from authenticated, live individuals are transmitted.

### Summary

In view of the above, an object according to embodiments of the present application is to overcome or at least mitigate drawbacks of prior art.

In a first aspect of the present application, a method for automatically sanctioning a user in an online community, is provided. The method includes the step of receiving user-generated content or behavior data in the online community, segmenting the user-generated content or behavior data into sessions based on predefined session rules, generating a risk score for each session using a machine learning risk score engine, wherein the risk score is based on predefined violation categories, aggregating the risk scores from multiple sessions related to the user, comparing the aggregated risk score to a predefined threshold for each violation category, automatically triggering a sanction if the aggregated risk score exceeds the predefined threshold for at least one violation category, continuously updating and recalibrating the risk score based on received user-generated content or behavior data, and continuously s monitoring the user after the sanction has been applied.

In a second aspect of the present application, a system for automatically sanctioning a user in an online community corresponding to the above-mentioned method, is also provided.

### Brief description of the drawings

Figure 1 illustrates a system architecture according to one embodiment of the present application, and its operational flow.
Figure 2 illustrates a section of the system architecture illustrated in Figure 1.
Figure 3 illustrates a section of the system architecture illustrated in Figure 1.

### Detailed description

According to embodiments of the present application as disclosed herein, the above-mentioned disadvantages of solutions according to prior art are eliminated or at least mitigated.

According to different embodiments of the present patent application, a method and a system is provided to automatically trigger a sanction if a user's total risk level exceeds a configurable risk level within predefined violation categories.

The invention pertains to an advanced system for moderating online communities by utilizing combined risk scores, violation categories, and configurable thresholds. This system empowers moderators to automatically sanction users who exceed predefined risk thresholds. The configurable nature of the thresholds and violation categories allows customization per customer community, enhancing the flexibility and effectiveness of moderation.

Community managers, moderators, or security personnel can configure risk thresholds across various violation categories. This feature provides the flexibility to adapt to different community standards regarding acceptable behavior and content. By establishing distinct violation categories, the system allows for varying risk levels in different areas. For instance, a stricter threshold can be set for severe violation categories like "Cyber Grooming," permitting minimal tolerance for suspected grooming behavior. Conversely, higher risk thresholds can be set for less severe categories such as "Bullying," to avoid sanctioning users for minor infractions like isolated inappropriate statements or curse words. This granularity in automated sanctioning facilitates efficient and context-sensitive moderation, reducing the need for individual case management.

When a user begins creating content or exhibits specific behavior patterns, the system generates a risk score for this input and categorizes it under an appropriate violation category. This risk score is then evaluated against a pre-configured threshold level. The risk score and categorization into different violation categories are created by breaking a conversation or content piece into sessions. How to create a session is in itself configurable, and is based on what type of content it is. Examples of questions to be made: Is it a one-to-one conversation between two people, is it a group chat between several persons, is it a comment to a picture, a broadcast message to the whole community or text within a user generated picture or movie? These different content types are mapped to some generic content categories based on the context of where the content is created. For instance, a conversation between two people can be one context category with rules for when a new session entity is created. As an example, a one-to-one session can be created after 20 sentences or cut of after x minutes if you never get to 20 sentences. This session is then sent to a Machine Learning (ML) Risk score engine with the context type one-to-one and analysed with metadata that this text has happened as a conversation between two people and have a specific length or timeframe. For other context types, a session can be single sentences or have varying timeframes. This makes it easier for the ML Risk score engine to categorise the content into different violations with the according risk score. Each session is then put back together as pieces of a longer conversation, group chat, comments or captions in a picture or movie. This means it is possible to continuously track the changes in topics, probable violation categories and accordingly, the risk level during a content stream like for instance a chat conversation that can go on for hours and even days. And it is this continuous risk level and labels for possible violations that is fed into the sanctions rules engine to see if the threshold for one or more of the specific violation categories are reached.

As an example, the ML Risk Score Engine produces a score between 0 and 1 for each session. For instance Session 1.1 - Sexual: 0.45, Session 1.2 - Personal info: 0.78, Session 1.3 - Sexual 0.82 etc. These scores are then placed in a risk bracket from 0-3 (0-0.25=0, 0.25-0.50=1, 0.50-0.75=2 and 0.75-1.00=3) and the output is that each session gets a potential violation category with a risk bracket from 0-3. This is summed up to a content risk score.

The system continuously analyzes various behavioral data and individual feature risk scores, integrating them into an overall actor risk score. This comprehensive risk score is also compared against a threshold level. The behavioral data can be used to analyse the frequency of messages in and out, it can be to do network graph analysis to look at each actor as a network node and look at patterns in the topology of the network. It can be to look at certain activities a user does and compare this to the account age and what is normal to do in this community as steps in a registration process or when you have a new account. The behavioral data and actor risk score can be used together with content risk score to be more certain that this is an actor that should be sanctioned if the content risk score alone didn't reach the threshold or a stricter sanction can be applied to this actor when the content risk score is combined with actor risk score if we are more certain that this actor, for instance a risk score on content alone would indicate a sanction that is a warning, a muting or a 1 day lock from the community. But with the added actor risk, rules can be set to change the sanction from a muting to a 7-day lock or a permanent ban. In some cases, the behavioral analysis alone can be enough to sanction certain actors/accounts. For instance, if the network pattern of a spammer or a bot is identified, the account can be paused or muted for this alone. Alternatively, if patterns that this is a recurring user of a previously banned account is identified, the account can also be paused or muted.

If the actor's risk score surpasses the configured threshold, a sanction is automatically triggered. If the risk score remains below the threshold, monitoring continues, and any new data will prompt a re-calculation and re-evaluation of the risk score against the threshold level.

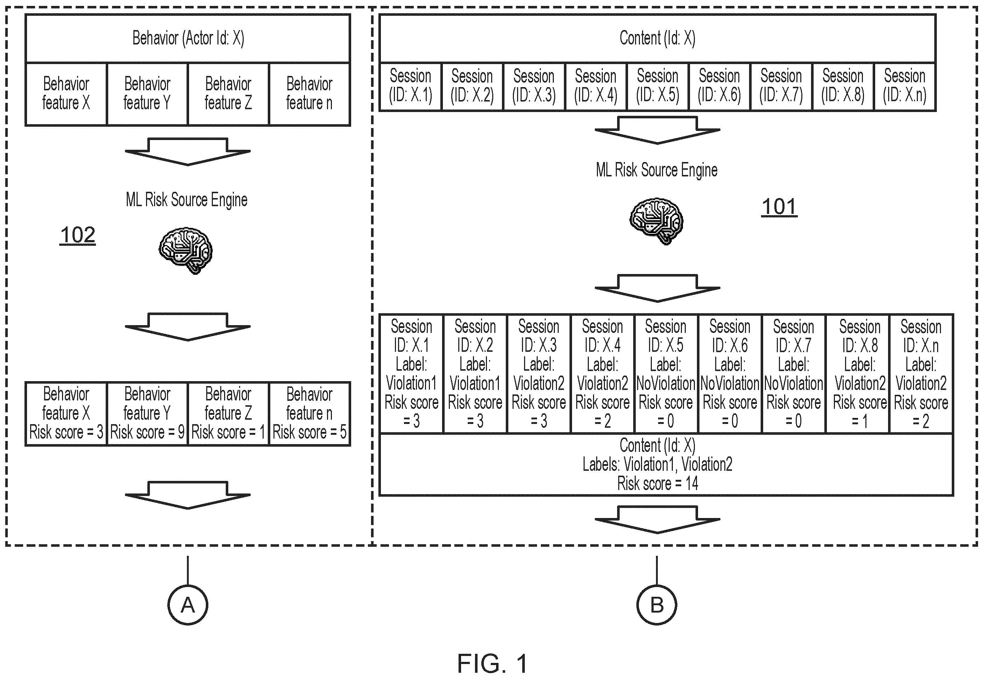

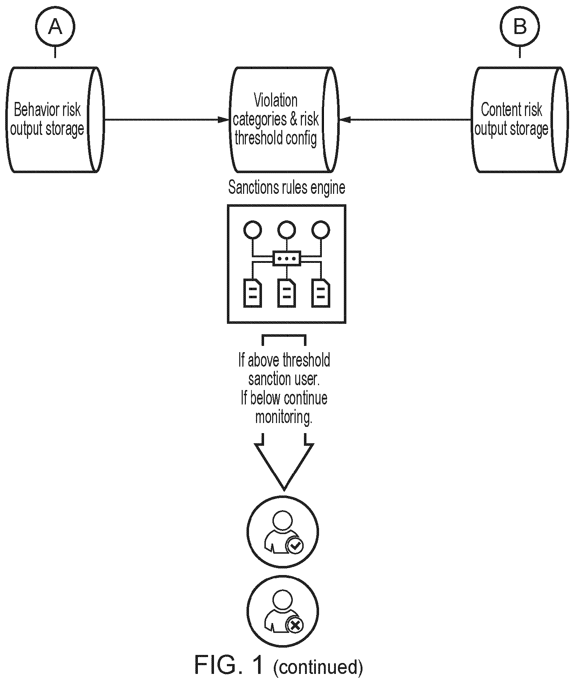

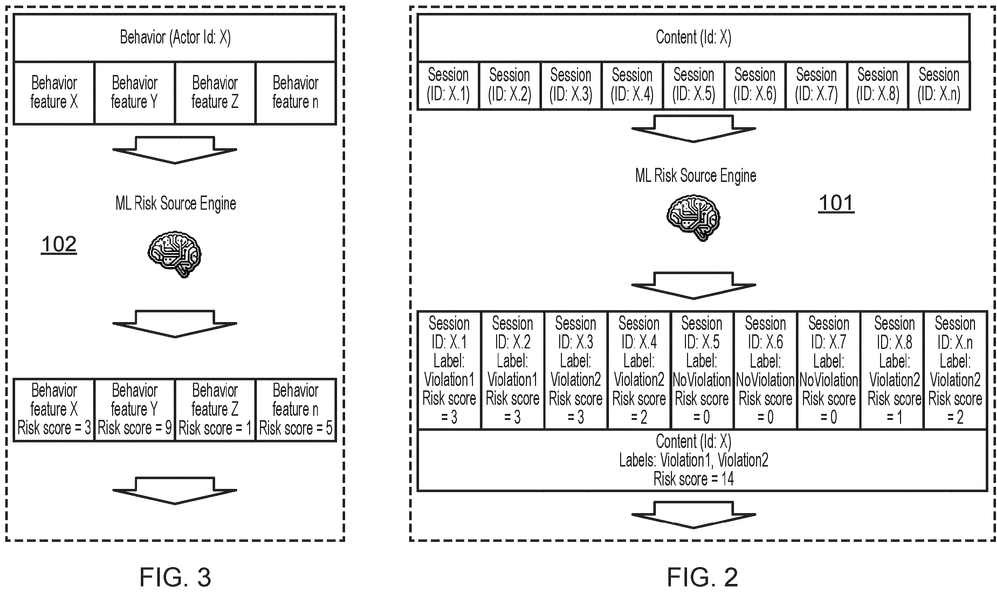

Figures 1, 2 and 3 shows how an embodiment according to the present application provides a visual representation of how user input is processed, risk scores are calculated, categorized, and compared against thresholds, and how sanctions are triggered based on these evaluations. It illustrates how two separate analytic pipelines either individually or combined contribute to the sanctions rules engine for automatic sanctioning. The first pipeline focuses on text content created in the digital community, and the second pipeline focuses on behavioral features based on what the actors do in the digital community. In the content pipeline the text is broken down into sessions of defined length or time and fed to the machine learning algorithms. The output per session is a content label and a risk score. The labels are the defined violation categories or labelled as innocent. All the sessions in a conversation or content piece are aggregated and stored related to the actor(s) creating the content. The aggregated risk score and potential violation categories are then fed into the sanctions rules engine and based on preset rule pr. violation category a sanction can be applied. The different violation categories will have defined risk thresholds in the sanctions rules engine and if a conversation or content piece hits the threshold a sanction is triggered. The sanctions rules engine is configurable so that it can be adjusted over time to treat specific violations either stricter or softer as the community changes over time. This means that each customer configuration can have their own thresholds set based on their existing community guidelines.

The primary advantage of this invention is the enhanced flexibility and precision it offers in moderating online communities. By allowing configurable thresholds and distinct violation categories, community managers can tailor the system to their specific needs, ensuring that the moderation process aligns with their community standards. This capability to set different risk levels based on the severity of violation categories allows for a balanced approach to user sanctions, promoting a fair and controlled online environment.

## Claims

1. A method for automatically sanctioning a user in an online community, the method comprising:
receiving user-generated content or behavior data in the online community;
segmenting the user-generated content or behavior data into sessions based on predefined session rules;
generating a risk score for each session using a machine learning risk score engine, wherein the risk score is based on predefined violation categories;
aggregating the risk scores from multiple sessions related to the user;
comparing the aggregated risk score to a predefined threshold for each violation category;
automatically triggering a sanction if the aggregated risk score exceeds the predefined threshold for at least one violation category;
continuously updating and recalibrating the risk score based on received user-generated content or behavior data; and
continuously s monitoring the user after the sanction has been applied.

2. The method of claim 1, wherein the predefined session rules vary based on the type of content, such as one-to-one conversations, group chats, or comments on a picture or video.

3. The method of claim 1, further comprising analyzing the behavioral data of the user to generate an actor risk score, which is combined with the content-based risk score to refine the final risk score before comparison to the predefined threshold.

4. The method of claim 1, wherein the sanction applied is selected from a group consisting of: a warning, muting, temporary suspension, and permanent banning of the user.

5. The method of claim 3, wherein the actor risk score is generated by analyzing network patterns, user activity compared to account age, or frequency of messaging, and used to identify spammers, bots, or recurring offenders.

6. The method of claim 1, further comprising recalibrating the risk thresholds periodically based on changes in community guidelines or observed user behavior trends.

7. A system for automatically sanctioning a user in an online community, the system comprising:
a user input processing module configured to receive user-generated content or behavior data in the online community;
a session segmentation module configured to segment the user-generated content or behavior data into sessions based on predefined session rules;
a machine learning risk score engine configured to generate a risk score for each session based on predefined violation categories;
an aggregation module configured to aggregate the risk scores from multiple sessions related to the user;
a threshold comparison module configured to compare the aggregated risk score to a predefined threshold for each violation category;
a sanctions rules engine configured to automatically trigger a sanction if the aggregated risk score exceeds the predefined threshold for at least one violation category;
a monitoring module configured to continuously update and recalibrate the risk score based on received user-generated content or behavior data, and continuously monitor the user after the sanction has been applied.

8. The system of claim 7, wherein the predefined session rules vary based on the type of content, such as one-to-one conversations, group chats, or comments on a picture or video.

9. The system of claim 7, further comprising a behavioral analysis module configured to analyze the behavioral data of the user and generate an actor risk score, which is combined with the content-based risk score to refine the final risk score before comparison to the predefined threshold.

10. The system of claim 7, wherein the sanctions rules engine is configured to select a sanction from a group consisting of: a warning, muting, temporary suspension, and permanent banning of the user.

11. The system of claim 9, wherein the behavioral analysis module is further configured to generate the actor risk score by analyzing network patterns, user activity compared to account age, or frequency of messaging, and used to identify spammers, bots, or recurring offenders.

12. The system of claim 7, wherein the sanctions rules engine is configured to recalibrate the risk thresholds periodically based on changes in community guidelines or observed user behavior trends.
